# EUROPÄISCHE PATENTSCHRIFT

(11) **EP 0 578 676 B1**
(45) Veröffentlichungstag und Bekanntmachung des Hinweises auf die Patenterteilung: **05.07.1995**
(21) Anmeldenummer: 92907301.3
(22) Anmeldetag: 02.04.1992
(51) Int. Cl.: F16D 66/02, F16D 55/226

(54) **TEILBELAGSCHEIBENBREMSE MIT HALTERUNG FÜR WARNKONTAKTSTECKER**
DISC BRAKE WITH HOLDER FOR WARNING CONTACT PLUG
FREIN A DISQUE AVEC SUPPORT DE PRISE DE CONTACT D'AVERTISSEMENT

(30) Priorität: 10.04.1991 DE 4111605; 07.12.1991 DE 4140390
(43) Veröffentlichungstag der Anmeldung: 19.01.1994
(73) Patentinhaber: ITT Automotive Europe GmbH, 60488 Frankfurt (DE)
(72) Erfinder: FUCHS, Elmar, D-6100 Darmstadt (DE); JUNGMANN, Hermann, D-6082 Mörfelden (DE); LÖFFLER, Josef, D-6000 Frankfurt am Main 1 (DE); GÜTTICH, Holger, D-6350 Bad-Nauheim (DE)
(86) Internationale Anmeldenummer: EP9200730
(87) Internationale Veröffentlichungsnummer: WO9218787

(56) Entgegenhaltungen:
- DE-A- 3 926 437
- DE-A- 4 016 273
- DE-A- 4 027 944
- DE-B- 2 827 035

## Beschreibung

Die Erfindung betrifft einen Halter für eine Teilbelagscheibenbremse mit einer Reibbelag-Verschleißwarnvorrichtung gemäß dem Oberbegriff des Patentanspruchs 1.

Ein gattungsgemäßer Halter für eine Teilbelagscheibenbremse ist aus der DE-A-39 26 437 bekannt. Der bekannte Halter ist an einer Entlüfterschraube des Bremssattels befestigt und dient dazu, einen elektrischen Leiter zu sichern. Der Leiter ist zwischen einem am Bremsklotz befestigten Warnkontakt und einem Warnkontaktstecker angeordnet, der wiederum an eine elektrische Warneinrichtung anschließbar ist. Um sicherzustellen, daß der Leiter nicht lose herumhängt und dabei möglicherweise mit der rotierenden Radfelge in Berührung kommt, wird er von dem bekannten Halter geführt und fixiert. Dieser bekannte Halter ist relativ kompliziert ausgestaltet und bietet keine Möglichkeit, den Warnkontaktstecker an der Bremse zu fixieren. Bei der Endmontage am Fahrzeug muß der Monteur beide Hände zu Hilfe nehmen, um einerseits den losen Stecker und andererseits den fahrzeugseitigen Gegenstecker miteinander zu verbinden.

Aufgabe der Erfindung ist es einen Halter anzugeben, der den Warnkontaktstecker einer gattungsgemäßen Bremse in einer vorgegebenen Position am Bremssattel befestigt, ohne daß am Bremsengehäuse selbst irgendwelche Änderungen vorgenommen werden müssen, und der einfach, funktionssicher und hinsichtlich Fertigung und Montage an der Bremse kostengünstig ausgestaltet ist.

Die Lösung der Aufgabe ergibt sich aus dem kennzeichnenden Teil des Hauptanspruchs. Der an einer Entlüfterschraube des Bremssattels befestigte Halter ist mit Laschen zur Verdrehsicherung und zur Positionierung des Warnkontaktsteckers versehen. Diese Befestigungsart hat den Vorteil, daß am Bremsengehäuse keine zusätzlichen Befestigungsmittel vorgesehen sind. Der Warnkontaktstecker braucht bei der Endmontage des Fahrzeugs vom Monteur nicht mehr ergriffen zu werden.

Eine besonders kompakte Ausführungsform gemäß Anspruch 2 empfiehlt sich bei sehr beengten Einbauverhältnissen.

Vorzugsweise ist der Halter gemäß Anspruch 3 mit Federzungen versehen, in deren Öffnungen der Warnkontaktstecker auf einfache Weise eingerastet wird.

In einer bevorzugten Ausführungsform gemäß Anspruch 4 ist der Halter einstückig aus Federblech geformt. Die Herstellung des Halters ist dabei besonders einfach und kostengünstig.

Anspruch 6 betrifft eine mit dem erfindungsgemäßen Halter ausgestattete Scheibenbremse.

Ausführungsbeispiele der Erfindung werden nachfolgend anhand der Zeichnungen näher erläutert.

Es zeigen
- Fig. 1: eine Seitenansicht einer Teilbelagscheibenbremse mit gehaltertem Warnkontaktstecker,
- Fig. 2: einen erfindungsgemäßen Halter im Schnitt gemäß Linie C-C aus Fig. 3 und 4,
- Fig. 3: eine Draufsicht auf den Befestigungsabschnitt des Halters gemäß Richtung B aus Fig. 2,
- Fig. 4: eine Draufsicht auf den Trägerarm des Halters gemäß Richtung A aus Fig. 2,
- Fig. 5: eine andere Ausführungsform eines erfindungsgemäßen Halters im Schnitt.

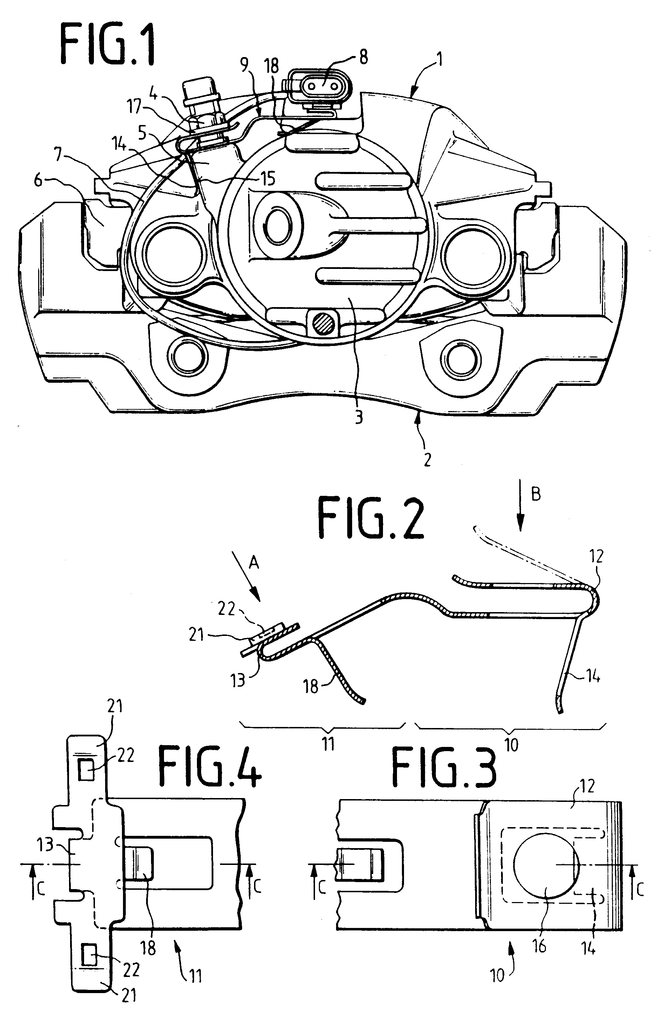

Die in Fig. 1 dargestellte Teilbelagscheibenbremse besteht im wesentlichen aus einem Bremssattel 1, der an einem Bremsträger 2 schwimmend gelagert ist und eine hydraulische Betätigungsvorrichtung mit einem Bremszylinder 3 aufweist. Die hydraulische Betätigungsvorrichtung ist mit einer Entlüfterschraube 4 versehen, die auf einem Vorsprung 5 des Bremssattels 1 angeordnet ist. Ein nur teilweise sichtbarer Bremsklotz 6 ist mit einem nicht gezeigten Belagverschleißfühler ausgestattet, dessen Warnkontakt über ein elektrisches Kabel 7 mit einem Warnkontaktstecker 8 verbunden ist. Der Warnkontaktstecker ist mittels eines Halters 9 am Bremssattel 1 gehaltert.

Der Halter ist in den Fig. 2 bis 4 genauer dargestellt. Er ist aus einem Stück Federblech gestanzt und geformt. Der Halter 9 besteht aus einem Befestigungsabschnitt 10 und einem Trägerarm 11. Die Enden 12,13 des Blechstreifens sind jeweils U-förmig umgebogen.

Das Ende 12 ist in Fig. 1 sowohl in eingebautem Zustand des Halters 9 als auch (gestrichelt) im entspannten Zustand des ausgebauten Halters 9 dargestellt. Aus der Mitte des Befestigungsabschnitts 10 ist eine Sicherungslasche 14 ausgestanzt und abgebogen, die zur Anlage an eine ebene Seitenwand 15 des Vorsprungs 5 am Bremssattel 1 bestimmt ist. Ferner ist das Ende 12 mit einer kreisförmigen Öffnung 16 zum Durchgang der Entlüfterschraube 4 versehen.

Der Halter 9 wird mit seinem Befestigungsabschnitt 10 am Bremssattel 1 befestigt, indem das Ende 12 unter einen Ringbund 17 der Entlüfterschraube 4 geklemmt wird. Durch die am Vorsprung 5 anliegende Sicherungslasche 14 wird der Halter 9 gegen Verdrehen um die Schraubenachse gesichert.

Aus der Mitte des Trägerarms 11 ist eine Stützlasche 18 ausgestanzt und abgebogen. Die Stützlasche 18 stützt den Trägerarm 11 des eingebauten Halters 9 gegen den Bremssattel 1 ab, wodurch die Position des Warnkontaktsteckers fixiert und störende Vibrationen vermindert werden.

Besondere Befestigungsmittel am Bremssattel 1 zur Befestigung des Halters 9 sind nicht vorgesehen.

An dem U-förmigen Ende 13 des Trägerarms 11 stehen seitlich zwei Federzungen 21 ab, die mit rechteckigen Öffnungen 22 versehen sind. Die Federzungen 21 sind in Richtung des Warnkontaktsteckers 8 (entgegen Richtung A) geringfügig abgewinkelt. Der Warnkontaktstecker 8 ist mit zwei (in den Figuren nicht gezeigten) Vorsprüngen versehen, die in die Öffnungen 22 einrastbar sind. Zur Befestigung des Warnkontaktsteckers 8 am Halter 9 wird der Warnkontaktstecker 8 mit seinen Vorsprüngen in Richtung A gegen die Federzungen 21 gedrückt, wobei die Federzungen 21 in Richtung A federnd nachgeben, bis die Vorsprünge in die Öffnungen 22 einrasten. Der Warnkontaktstecker 8 ist dann an den Federzungen 21 fest angeklemmt und lösbar, aber sicher gehalten. Zum Lösen der Befestigung braucht man nur die Federzungen 21 in Richtung A zu drücken, wobei der Warnkontaktstecker 8 freigegeben wird und entnommen werden kann.

Selbstverständlich ist die Erfindung nicht auf dieses Ausführungsbeispiel beschränkt. Sie läßt sich mit Vorteil bei allen Teilbelagscheibenbremsen, insbesondere auch Festsattelbremsen, verwenden, die mit einer elektrischen Warnvorrichtung und einer Entlüfterschraube ausgestattet sind. Dabei muß die genaue Form des jeweiligen Halters an den verwendeten Bremssattel angepaßt werden.

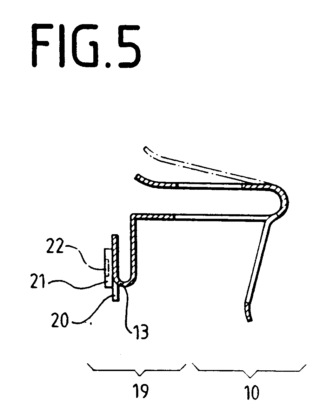

Ein Beispiel einer anderen Ausführungsform ist in Fig. 5 dargestellt. Hier ist der Trägerarm 19 im Bereich des Warnkontaktsteckers 8 an seinem U-förmigen Ende 13 zum Bremssattel 1 hin zusätzlich im rechten Winkel abgebogen. Dabei wird eine sehr kompakte Bauform erzielt, die an beengte Einbauverhältnisse angepaßt ist. Die Stützlasche 20 ist zur Anlage am Bremssattel vorgesehen.

## Patentansprüche

1. Halter für eine Teilbelagscheibenbremse, die eine elektrische Reibbelag-Verschleißwarnvorrichtung mit einem Warnkontaktstecker (8) aufweist, wobei der Halter (9) mittels einer auf einem Vorsprung (5) des Bremssattels (1) angeordneten Entlüfterschraube (4) befestigbar ist und einen Befestigungsabschnitt (10) mit einer Öffnung (16) zum Durchgang der Entlüfterschraube (4) aufweist, dadurch **gekennzeichnet**, daß der Befestigungsabschnitt (10) mit mindestens einer Sicherungslasche (14) versehen ist, die an einer Seitenwand (15) des genannten Vorsprungs (5) des Bremssattels (1) anlegbar ist, daß ein von der Öffnung (16) seitlich wegragender Trägerarm (11,19) des Halters (9) zur Befestigung des Warnkontaktsteckers (8) dient und daß der Trägerarm (11,19) mit mindestens einer Stützlasche (18,20) versehen ist, mittels derer er am Bremssattel (1) abstützbar ist.

2. Halter nach Anspruch 1, dadurch **gekennzeichnet**, daß der Trägerarm (19) im Bereich des Warnkontaktsteckers (8) zum Bremssattel (1) hin umgebogen ist und mit der Stützlasche (20) am Bremssattel (1) anliegt.

3. Halter nach Anspruch 1 oder 2, dadurch **gekennzeichnet**, daß der Trägerarm (11,19) an seinem U-förmigen Ende (13) seitlich abstehende Federzungen (21) mit Öffnungen (22) aufweist, in denen passende Vorsprünge des Warnkontaktsteckers (8) einrastbar sind.

4. Halter nach einem der Ansprüche 1 bis 3, dadurch **gekennzeichnet**, daß der Halter (9) einstückig aus Federblech geformt ist.

5. Halter nach einem der Ansprüche 1 bis 4, dadurch **gekennzeichnet**, daß der Halter (9) aus einem Streifen Federblech geformt ist, dessen Enden (12,13) jeweils U-förmig umgebogen sind, daß das eine Ende (12) als Befestigungsabschnitt (10) mit einer Öffnung (16) zum Durchgang einer Entlüfterschraube (4) und mit einer neben der Öffnung (16) angeordneten und gegenüber dieser abgewinkelten Sicherungslasche (14) versehen ist, daß das andere, als Trägerarm (11,19) für den Warnkontaktstecker (8) ausgebildete Ende (13) mit mindestens einer abgewinkelten Stützlasche (18,20) versehen ist.

6. Teilbelagscheibenbremse mit einem Bremssattel (1), mit Bremsklötzen (6), mit einer elektrischen Reibbelag-Verschleißwarnvorrichtung, die die Abnutzung des Reibbelags an zumindest einem der Bremsklötze (6) anzeigt, mit einem Warnkontaktstecker (8), der über einen oder mehrere elektrische Leiter (7) mit zumindest einem an einem Bremsklotz (6) befestigten Belagverschleißfühler verbunden ist, mit einer auf einem Vorsprung (5) des Bremssattels (1) angeordneten Entlüfterschraube (4) und mit einem Halter (9), der einen Befestigungsabschnitt (10) mit einer Öffnung (16) zum Durchgang der Entlüfterschraube (4) aufweist und mittels der Entlüfterschraube (4) am Bremssattel (1) befestigt ist, nach einem der Ansprüche 1 bis 5, dadurch **gekennzeichnet**, daß der Befestigungsabschnitt (10) mit mindestens einer Sicherungslasche (14) versehen ist, die an einer Seitenwand (15) des genannten Vorsprungs (5) des Bremssattels (1) anliegt, daß ein von der Entlüfterschraube (4) seitlich wegragender Trägerarm (11,19) des Halters (9) den Warnkontaktstecker (8) trägt und daß der Trägerarm (11,19) mit mindestens einer Stützlasche (18,20) versehen ist, mittels derer er am Bremssattel (1) abgestützt ist.

## Claims

1. A holder for a spot-type disc brake which includes an electric friction lining wear warning device including a warning contact plug (8), wherein the holder (9) is adapted to be attached by a bleeder screw (4) arranged on a projection (5) of the brake caliper (1), the holder having a fixing section (10) with an aperture (16) for passage of the bleeder screw (4),
**characterized** in that the fixing section (10) includes at least one securing tongue (14) which is movable into abutment against a lateral wall (15) of the projection (5) of the brake caliper (1), in that a carrier arm (11, 19) of the holder (9) jutting off laterally from the aperture (16) serves to fix the warning contact plug (8), and in that the carrier arm (11, 19) has at least one supporting tongue (18, 20) for supporting the carrier arm at the brake caliper (1).

2. A holder as claimed in claim 1,
**characterized** in that, proximate the warning contact plug (8), the carrier arm (19) is bent off in the direction of the brake caliper (1) to abut with the supporting tongue (20) against the brake caliper (1).

3. A holder as claimed in claim 1 or in claim 2,
**characterized** in that, at its U-shaped end (13), the carrier arm (11, 19) has spring tongues (21) protruding laterally and having apertures (22) for receiving and locking thereinto matching projections of the warning contact plug (8).

4. A holder as claimed in anyone of claims 1 to 3,
**characterized** in that the holder (9) is made from a one-piece spring metal sheet.

5. A holder as claimed in anyone of claims 1 to 4,
**characterized** in that the holder (9) is made from a strip of spring metal sheet having two ends (12, 13) each bent over to U-shape, in that the one end (12) is a fixing section (10) and includes an aperture (16) for the passage of the bleeder screw (4), and also includes a securing tongue (14) positioned beside the aperture (16) and angled off with respect to the aperture, in that the other end (13) being arranged as a carrier arm (11, 19) for mounting the warning contact plug (8) thereonto has at least one angled-off supporting tongue (18, 20).

6. A spot-type disc brake which includes a brake caliper (1), brake shoes (6), an electric friction lining wear warning device indicating the wear of the friction lining at least at one of the brake shoes (6), also including a warning contact plug (8) which is connected through one or through a plurality of electric conductors (7) with at least one friction lining wear sensor being fixed to one brake shoe (6), and including a bleeder screw (4) arranged on a projection (5) of the brake caliper (1), and a holder (9) having a fixing section (10) with an aperture (16) for passage of the bleeder screw (4) and being fixed to the brake caliper (1) by means of the bleeder screw (4) as claimed in any one of claims 1 to 5,
**characterized** in that the fixing section (10) includes at least one securing tongue (14) for abutment against a lateral wall (15) of the projection (5) of the brake caliper (1), in that a carrier arm (11, 19) of the holder (9) jutting off laterally from the bleeder screw (4) carries the warning contact plug (8), and in that the carrier arm (11, 19) includes at least one supporting tongue (18, 20) for supporting the carrier arm at the brake caliper (1).

## Revendications

1. Support pour frein à disque à garnitures partielles comprenant un dispositif électrique d'avertissement d'usure de garniture de friction comportant une prise de contact d'avertissement (8), dans lequel le support (9) est agencé de façon à pouvoir être fixé au moyen d'une vis de purge d'air (4) disposée sur une partie en saillie (5) de l'étrier de frein (1) et comprend une section de fixation (10) comportant une ouverture (16) pour le passage de la vis de purge d'air (4), caractérisé en ce que la section de fixation (10) est pourvue d'au moins une languette de sécurité (14) qui est agencée de façon à pouvoir être appliquée contre une paroi latérale (15) de ladite partie en saillie (5) de l'étrier de frein (1), en ce qu'une branche porteuse (11, 19) du support (9) qui s'éloigne sur le côté à partir de l'ouverture (16) sert à fixer la prise de contact d'avertissement (8) et en ce que la branche porteuse (11, 19) est pourvue d'au moins une languette d'appui (18, 20) par laquelle elle peut prendre appui sur l'étrier de frein (1).

2. Support selon la revendication 1, caractérisé en ce que la branche porteuse (19) est pliée vers l'étrier de frein (1) dans la zone de la prise de contact d'avertissement (8) et prend appui par la languette d'appui (20) sur l'étrier de frein (1).

3. Support selon la revendication 1 ou 2, caractérisé en ce que la branche porteuse (11, 19) comporte des pattes élastiques (21) se dressant transversalement sur son extrémité (13) en U et présentant des ouvertures (22) dans lesquelles peuvent s'enclencher des parties en saillie de la prise de contact d'avertissement (8) qui sont adaptées.

4. Support selon l'une des revendications 1 à 3, caractérisé en ce que la support (9) est façonné, d'une seule pièce, à partir d'une tôle élastique.

5. Support selon l'une des revendications 1 à 4, caractérisé en ce que le support (9) est façonné à partir d'une bande de tôle élastique dont chacune des extrémités (12, 13) est recourbée en U, en ce que l'une (12) des extrémités, servant de section de fixation (10), est pourvue d'une ouverture (16), pour le passage d'une vis de purge d'air (4), et d'une languette de sécurité (14) située à côté de l'ouverture (16) et pliée à l'opposé de cette ouverture et en ce que l'autre extrémité (13), réalisée sous la forme d'une branche porteuse (11, 19) pour la prise de contact d'avertissement (8), est pourvue d'au moins une languette d'appui (18, 20) pliée.

6. Frein à disque à garnitures partielles, comprenant un étrier de frein (1), des plaquettes de frein (6), un dispositif électrique d'avertissement d'usure de garniture de friction, qui indique l'usure de la garniture de friction, sur au moins l'une des plaquettes de frein (6), une prise de contact d'avertissement (8), qui est reliée par un ou plusieurs conducteurs électriques (7) à au moins un détecteur d'usure de garniture fixé sur une plaquette de frein (6), une vis de purge d'air (4), disposée sur une partie en saillie (5) de l'étrier de frein (1), et un support (9) qui comprend une section de fixation (10) comportant une ouverture (16) pour le passage de la vis de purge d'air (4) et qui est fixé sur l'étrier de frein (1) au moyen de la vis de purge d'air (4), selon l'une des revendications 1 à 5, caractérisé en ce que la section de fixation (10) est pourvue d'au moins une languette de sécurité (14) qui prend appui sur une paroi latérale (15) de ladite partie en saillie (5) de l'étrier de frein (1), en ce qu'une branche porteuse (11, 19) du support (9) qui s'éloigne transversalement de la vis de purge d'air (4) porte la prise de contact d'avertissement (8) et en ce que la branche porteuse (11, 19) est pourvue d'au moins une languette d'appui (18, 20) par laquelle elle prend appui sur l'étrier de frein (1).
